# EUROPEAN PATENT APPLICATION

(11) **EP 3 754 772 A1**
(43) Date of publication of application: **23.12.2020**
(21) Application number: 19754891.0
(22) Date of filing: 12.02.2019
(51) Int. Cl.: H01M 10/04, H01M 2/02

(54) **HIGH-SPEED STACK MANUFACTURING APPARATUS FOR SECONDARY BATTERY**

(30) Priority: 13.02.2018 KR 20180017872; 13.02.2018 KR 20180018363
(71) Applicant: Innometry Co., Ltd., Gyeonggi-do 13930 (KR); Shin, Hyuk, Gyeonggi-do 18482 (KR)
(72) Inventor: HONG, Nam Hyeong, Hwaseong-Si Gyeonggi-do 18408 (KR); YEOM, Cheol Won, Osan-Si Gyeonggi-do 18109 (KR); SHIN, Hyuk, Hwaseong-Si Gyeonggi-do 18482 (KR)
(74) Representative: Reiser & Partner Patentanwälte mbB
(86) International application number: PCT/KR2019/001713
(87) International publication number: WO 2019/160305

(57) **Abstract**

The present invention provides a stack manufacturing apparatus for a secondary battery, comprising a stacking unit (40) provided with: a stack base (41) on which plates (1, 2) to be stacked are placed; grippers (42a, 42b, 43a, 43b) for fixing the plates placed on the stack base (41); and a moving means for moving the stack base (41) between the position in which the positive plate (2) is placed and the position in which the negative plate (1) is placed, wherein the moving means is capable of moving the stack base (41) in a U-shaped trajectory.

## Description

### Technical Field

The present invention relates to an apparatus for manufacturing a cell of a secondary battery, and more particularly, to an apparatus for manufacturing a stack in which negative electrode plates and positive electrode plates are alternately placed on separators.

### Background

In general, a chemical cell is composed of a pair of electrodes, i.e., a positive electrode plate and a negative electrode plate, and electrolyte. The amount of energy that can be stored in a chemical cell varies depending on the material contained in the electrode and the electrolyte. The chemical cells are classified into primary batteries used only for one-time discharge due to a very slow charging reaction and secondary batteries that can be reused through repetitive charging and discharging. Recently, the use of secondary batteries is increasing due to the advantage of charging and discharging.

Due to its advantages, secondary batteries have been applied to various technical fields throughout the industry, and are widely used as energy sources of mobile communication devices such as smart phones, and are attracting attention as energy sources of electric vehicles.

The secondary battery is manufactured in a form in which a positive electrode plate, a separator, and a negative electrode plate are sequentially stacked to be immersed in electrolyte. There are two main methods of manufacturing an inner cell stack of the secondary battery.

In the case of a small secondary battery, a method of arranging a negative electrode plate and a positive electrode plate on a separator and winding them in a jelly-roll form is widely used, whereas in the case of a medium and large secondary battery having more electric capacity, a method of arranging a negative electrode plate and a positive electrode plate by stacking them in a proper order with a separator is widely used. Particularly, in the case of the stacking method, electrode plates obtained by blanking are mainly used, and thus the battery has excellent performance due to a relatively large space through which the electrolyte solution penetrates between the edge of the electrode plates and the separator.

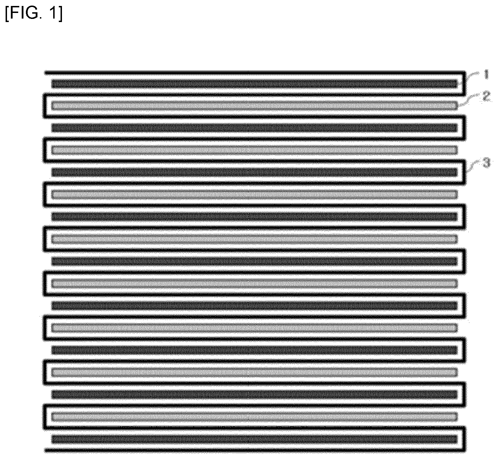

In the zigzag type stacking methods widely used among the methods of manufacturing a secondary battery cell stack in a stacking manner, the separator 3 forms a zigzag folded form, and the negative electrode plate 1 and the positive electrode plate 2 are alternately stacked in an inserted form, as illustrated in FIG. 1.

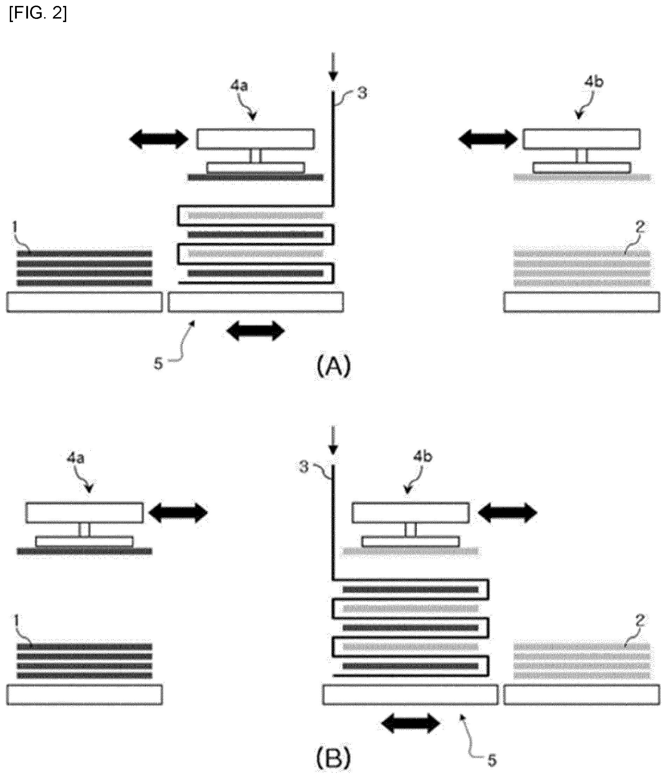

According to a zigzag type stacking method which is widely used in recent years among various zigzag type stacking methods, the electrode plates and the separator are stacked on a stack base 5 while the stack base 5 moves horizontally between the negative electrode plate 1 magazine on the left side and the positive electrode plate 2 magazine on the right side, as shown in FIG. 2. According to this method, when the stack base 5 is moved toward the negative electrode plate 1 magazine ((A) in FIG. 2), a negative electrode plate loader 4a moving between the negative electrode plate magazine on the right side and the stack base 5 stacks the negative electrode plate 1 on the separator. Then, the stack base 5 moves toward the positive electrode plate 2 magazine on the right side ((B) in FIG. 2), and a positive electrode plate loader 4b similarly stacks the positive electrode plate 2 on the separator 3. By repeating this process, a cell stack in which the separator is folded in a zigzag form between the negative electrode plate and the positive electrode plate is obtained.

A similar stacking method by horizontal movement of a stack base is disclosed in Korean Patent No. 10-1140447 (registered on April 19, 2012, hereinafter referred to as 'prior art 1'). According to the prior art 1, positive electrode plates and negative electrode plates which were placed in cartridges are respectively transferred to an alignment tray by a transfer robot, aligned in an alignment tray and then transferred to a stacking tray. Stacking is achieved by moving the stacking tray horizontally in the manner shown in FIG. 2 as described above.

Korean Patent No. 10-1730469 (registered on April 20, 2017, hereinafter referred to as 'prior art 2') discloses a cell stack manufacturing apparatus for alternately stacking a negative electrode plate and a positive electrode plate on a continuously supplied separator. The apparatus has a tilting stage in which a negative electrode plate and a positive electrode plate are alternately placed on a tilting stage while the tilting stage reciprocates by rotating at a predetermined angle about a horizontal axis. Also disclosed is an electrode plate loading unit consisting of a plurality of link members for transferring an electrode plate from a cassette in which a plurality of negative electrode plates or positive electrode plates are stored to an alignment table.

The prior arts 1 and 2 have the following limitations on the moving speed of the stack base.

In the above prior art 1, the moving speed of the stacking tray moving horizontally is limited due to the characteristics of 'horizontal moving'. The reasons for this are as follows.

First, as the moving speed of the horizontally moving stack tray (or stack base) increases, damage to the portion of the separator gripped by grippers on the stack base increases. This is because the stack base reciprocates between two positions, and thus moves in the order of 'move forward-stop-move backward,' the inertial force due to acceleration increases as the speed increases, and the force applied to the portion of the separator that is gripped by the gripper becomes considerable when the stack base is stopped. Since this may cause damage to the separator, the moving speed of the stack base is limited below a certain level.

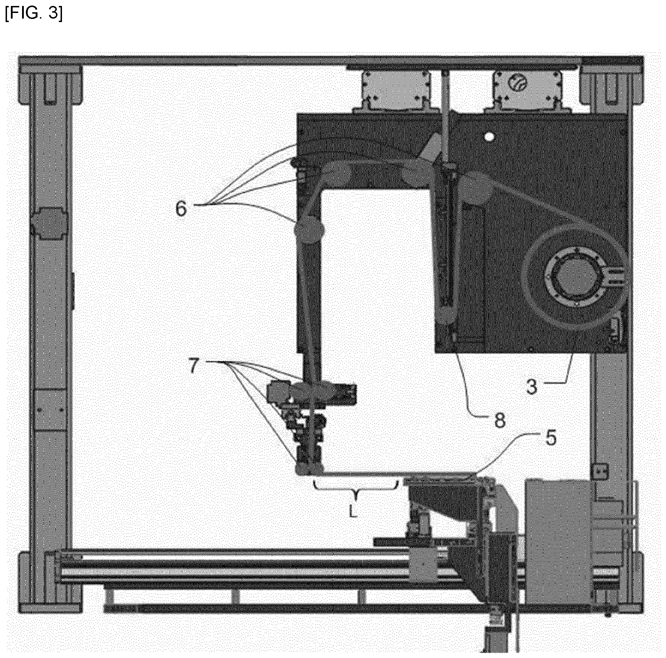

Second, the moving speed is limited because of the time required to correct 'back-feeding phenomenon' of the separator accompanying the horizontal movement of the stack base. Referring to FIG. 3, which shows a typical configuration of the horizontally moving stack base and the separator, a roll-shaped separator 3 extends through reel members 6 and guide rollers 7 to the stack base 5. In the drawing, during the stack base located on the right side moves horizontally to the left side below the guide rollers 7, the tension of the separator must be uniformly maintained so that the separator does not collapse. This is achieved by a pressure roller 8. That is, as the stack base 5 moves to the left side, the pressure roller 8 descends and the tension of the separator is maintained. At this time, it is inevitable that the portion L of the separator, which has been unrolled downward to the stack base via the guide roller 7, is fed back upward through the guide rollers 7. When the separator which is typically made of polymeric material is fed back, it is easy to get out of its original position, similar to that a roll-type toilet paper is jagged when it is rewound. To correct this, the reel members 6 and the guide rollers 7 need to be moved back and forth during the back-feed of the separator. The time required for this calibrating operation limits the horizontal movement speed of the stack base 5.

Therefore, although it is possible to further increase the moving speed of the stack base considering its performance, it is not allowed to increase the speed above a certain limitation.

Likewise, in the prior art 2, the reciprocating rotational speed is limited due to the limitation of the speed for preventing damage to the gripped separator when the tilting stage is reciprocated at an angle, and the back-feed of the separator.

### Detailed Description of The Invention

### Technical Object

The object of the present invention is to shorten the time for manufacturing cell stacks by maximizing the moving speed of the stack base reciprocating between the positive electrode plate stack position and the negative electrode plate stack position.

### Technical Solution

According to one aspect of the present invention an apparatus for manufacturing a cell stack for a secondary battery may comprise a stack base on which an electrode plate to be stacked is placed, a gripper for fixing the electrode plate placed on the stack base, and a stacking unit including a moving means for moving the stack base between a position where a positive electrode plate is placed and a position where a negative electrode plate is placed, and the moving means is capable of moving the stack base in a U-shaped trajectory.

According to another aspect of the present invention, an apparatus for manufacturing a cell stack for a secondary battery may comprises a stack base on which an electrode plate to be stacked is placed, a gripper for fixing the electrode plate placed on the stack base, and a stacking unit including a moving means for moving the stack base between a position where a positive electrode plate is placed and a position where a negative electrode plate is placed, and the moving means is capable of moving the stack base in a lower semicircular trajectory.

According to another aspect of the present invention, the moving means includes an actuator capable of vertically moving the stack base, and a horizontal movement mechanism capable of horizontally moving the stack base.

According to another aspect of the present invention, the moving means includes a cam unit having a cam driving body and a cam following body.

According to another aspect of the present invention, a back-feeding of a separator does not occur while the moving means moves the stack base.

### Effect of the invention

In the apparatus for manufacturing a cell stack for a prismatic secondary battery according to the present invention, the stack base is moved between a positive electrode plate stack position and a negative electrode plate stack position in a U-shaped trajectory or a lower semicircular trajectory, so that the separator is not damaged by the gripper and the separator is not fed back. Thus, the moving speed of the stack base can be increased to the maximum in terms of equipment performance.

Therefore, the apparatus for manufacturing a cell stack for a prismatic secondary battery according to the present invention can increase the speed of operation for stacking a cell stack, significantly shorten the work time and improve productivity. Furthermore, the same productivity can be achieved using fewer stack manufacturing apparatus, thereby reducing device purchase and maintenance costs and increasing space efficiency.

### Brief Description of the Drawings

FIG. 1 is a side view schematically showing an inner cell stack of a secondary battery manufactured by a zigzag stacking method.
FIG. 2 is a conceptual diagram of a conventional zigzag stacking method.
FIG. 3 is a side view of a conventional zigzag stack manufacturing apparatus, showing a path through which a separator is supplied to a stack base.
FIG. 4 is a perspective view of the apparatus for manufacturing a cell stack for a prismatic secondary battery according to an embodiment of the present invention.
FIG. 5 is a side view of the stack manufacturing apparatus shown in FIG. 4.
FIG. 6 is a plan view of the stack manufacturing apparatus shown in FIG. 4.
FIG. 7 is a rear view of the stack manufacturing apparatus shown in FIG. 4.
FIG. 8 is a front view of the stack manufacturing apparatus shown in FIG. 4.
FIG. 9 is another perspective view of the stack manufacturing apparatus shown in FIG. 4.
FIG. 10 is a plan view of an electrode plate supply unit according to an embodiment of the present invention.
FIG. 11 is a perspective view of an electrode plate loading unit according to an embodiment of the present invention.
FIG. 12 illustrates an operation of the electrode plate loading unit with devices located along its periphery in accordance with one embodiment of the present invention.
FIG. 13 shows a movement path of an electrode plate during an electrode plate alignment operation according to an embodiment of the present invention.
FIGS. 14a, 14b, and 14c illustrate a movement trajectory of the stack base in an electrode plate stacking unit according to an embodiment of the present invention.
FIG. 15a is a conceptual diagram illustrating a path in which the stack base moves to the left according to an embodiment of the present invention, and FIG. 15b illustrates a path in which the stack base moves to the right.

In FIG. 16, 'a' sequentially shows a movement path of the stack base according to the prior art, and 'b' sequentially illustrates a movement path of the stack base according to an embodiment of the present invention.

### Embodiments of the Invention

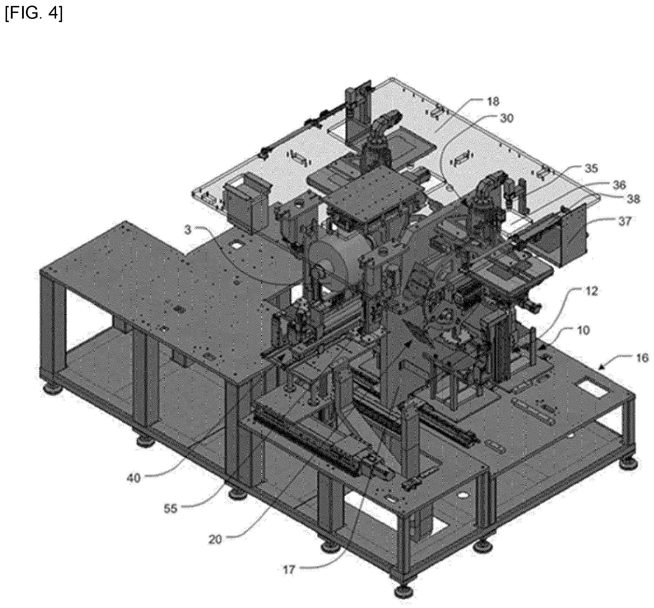

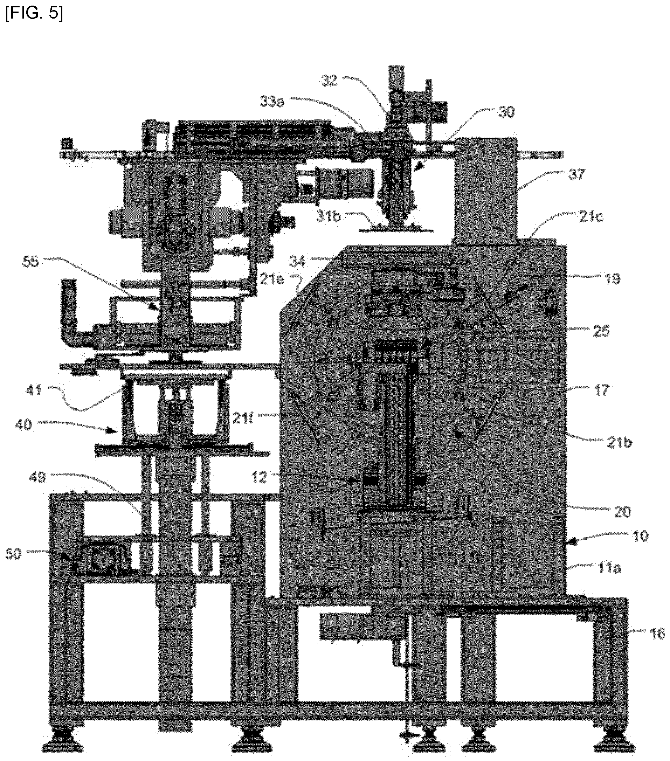

Hereinafter, an embodiment of a high-speed stack manufacturing apparatus for a prismatic secondary battery according to the present invention will be described in detail with reference to the accompanying drawings. In FIGS. 5-9, which show different orientation views of the perspective view of FIG. 4, some components may have been omitted for convenience of explanation.

FIG. 4 is a perspective view of a high-speed stack manufacturing apparatus according to an embodiment of the present invention. For convenience of explanation, components not directly related to the present invention, such as a stack discharge unit, a stack wrapping unit, or a separator cutting unit, are not shown.

Referring to FIG. 4, a loading and stacking structure for any one of the negative electrode plate 1 and the positive electrode plate 2 is arranged in front of a vertical plate 17, and behind the vertical plate 17, another loading and stacking structure of the same structure for the other one of the negative electrode plate 1 and the positive electrode plate 2 is arranged. Thus, the description of one of them is replaced by the description of the other.

An electrode plate loading unit 20 includes a rotating body 22 capable of rotating about a rotation axis fixed to the vertical plate 17 installed on a frame 16. An electrode plate supply unit 10 is arranged below the electrode plate loading unit 20. An electrode plate alignment unit 30 is arranged above the electrode plate loading unit 20, and a stack base loader 55 and a stacking unit 40 are arranged near a roll-shaped separator 3. The rotating body 22 has its rotation axis fixed to the vertical plate 17, and a camera 35 is installed on a horizontal plate 18 fixed above the vertical plate 17. The horizontal plate has a window 36 so as not to obstruct the viewing angle of the camera 35. A sliding mechanism 38 and a failure discharge tray 37 are attached to the horizontal plate 18.

Referring to FIG. 5, an electrode plate supply unit 10 including cassettes 11a and 11b and an electrode plate loader 12 is disposed on the frame 16. A plurality of rectangular electrode plates (not shown) are placed in the cassettes 11a and 11b, and, during operation of the electrode plate loading unit 10, the cassette 11b is positioned under the electrode plate loader 12.

Electrode plate holding panels 21a, 21b, 21c, 21d, 21e, and 21f are arranged at regular intervals along the circumference of the rotating body 22. Reference numerals 21a, 21b, 21c, 21d, 21e, and 21f are not assigned to specific panels, but are assigned according to their relative positions with the rotating body 22. For example, 21a is assigned to the panel in the lowest position of the rotating body 22, and 21d is assigned to the panel in the uppermost position. The number of electrode plate holding panels may be selected according to the number of required tasks or other variables, as will be described below.

In FIG. 5, a sensor 19 is provided at a position facing the panel 21c. The sensor 19 may be attached to the vertical plate 17. For example, a laser displacement sensor may be used as the sensor 19 to detect whether the electrode plate holding panel 21c holds two or more electrode plates at a time.

On the left side of the rotating body 22, a stacking unit 40 including a stack base 41, a guide rod 49, and a horizontal movement mechanism 50 is disposed, and a stack base loader 55 is disposed over the stack base 41. An electrode plate transfer panel 56 is attached to one end of the stack base loader 55, and the stack base loader 55 may rotate about a rotation axis located at the other end. As shown in FIG. 5, the stack base loader 55 may rotate from a position where the electrode plate transfer panel 56 faces the stack base 41 to a position where the electrode plate transfer panel 56 faces the electrode plate holding panel 21e. Of course, the opposite direction of rotation is also possible.

The failure discharge tray 37 attached to the sliding mechanism 38 normally stays at the position shown in FIG. 5, and is moved between an electrode plate alignment panel 31b and an alignment base 34 when the defective electrode plate is to be discharged. After receiving the defective electrode plate, the discharge tray 37 can be returned to its usual position.

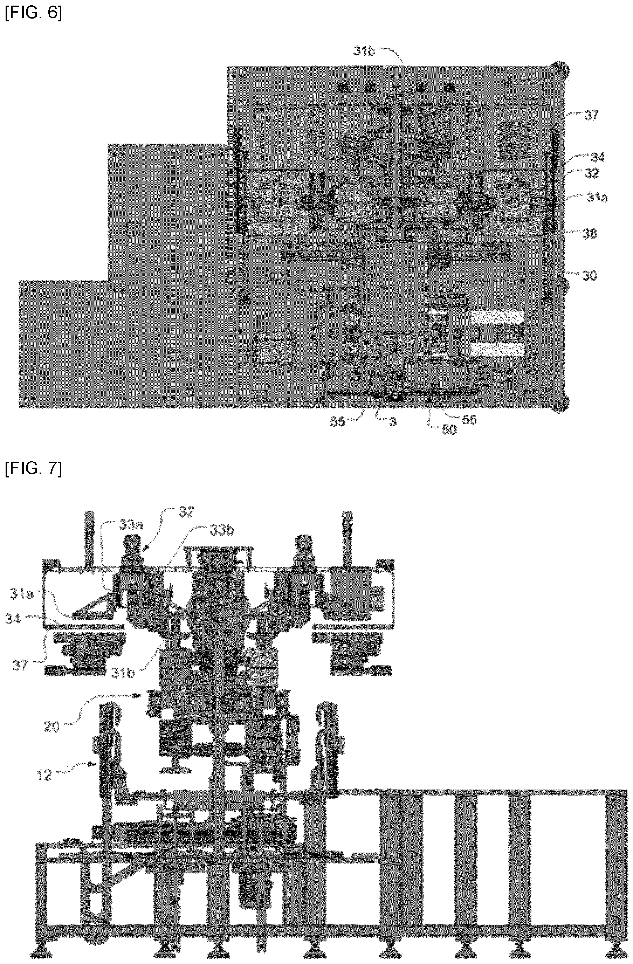

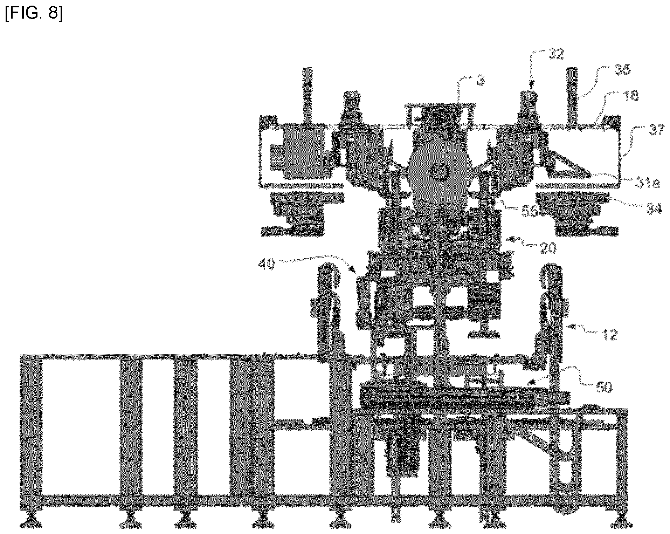

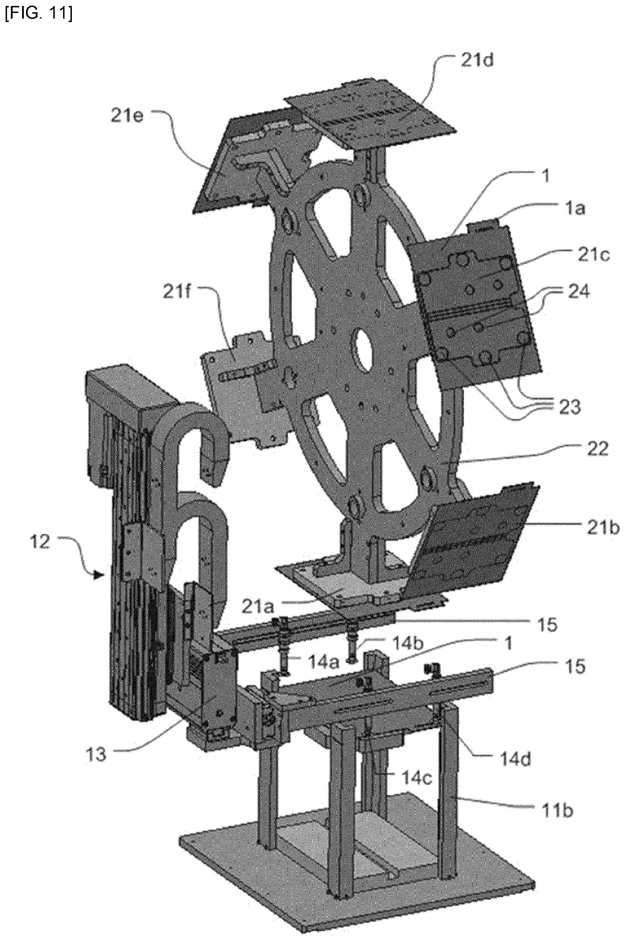

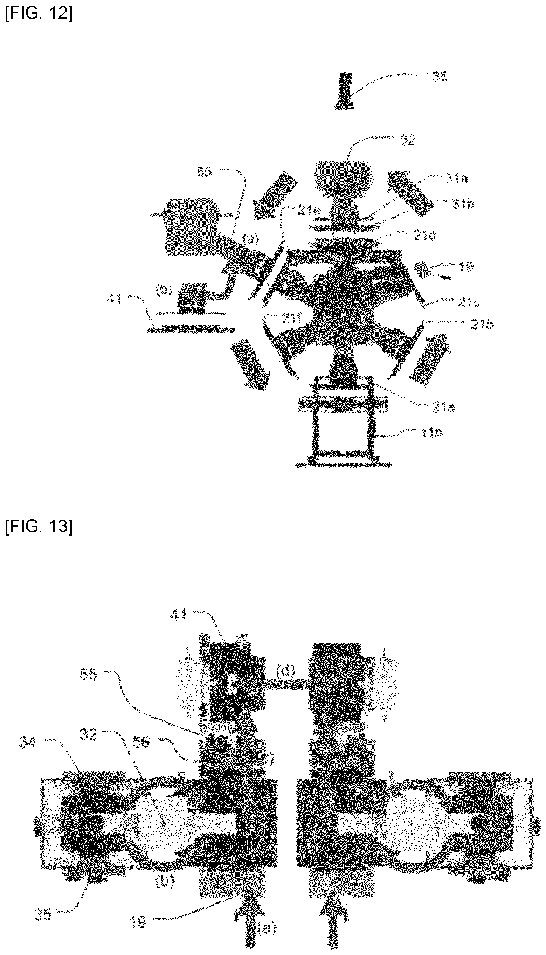

Referring to FIG. 6, there is shown an electrode plate alignment unit 30 including electrode plate alignment panels 31a and 31b, an alignment loader 32, and an alignment base 34. Similarly to as above, reference numeral 31b designates an alignment panel at a position facing the electrode plate holding panel 31d and reference numeral 31a designates an alignment panel at a position facing the alignment base 34. The two electrode plate alignment bases 31a and 31b are connected to the alignment loader 32 so that their positions are mutually changed by the rotation of the alignment loader 32 by 180 degrees. The camera 35 (see FIGS. 8 and 12) is installed over the alignment base 34, and the alignment state of the unaligned electrode plate may be confirmed by the camera 35. The camera 35 may be a vision camera that is manually adjustable about the X-Y-Z axis. The alignment base 34 may be an XYθ alignment table capable of position correction, and backlight illumination may be applied. In addition, the alignment base 34 may exert a vacuum suction force on the electrode plate placed thereon. With this arrangement, the alignment base 34 can be finely moved in the X-Y axis or the X-Y-Z axis until the alignment is achieved by detection of the edge position of the electrode plate on the alignment base 34 by the camera 35. The camera 35 may acquire various information from the edge state of the electrode plate on whether the electrode plate is defective, for example, whether the edges are aligned, whether it is broken, lifted or crumpled, whether it has an electrode plate tab 1a (see FIG. 11), and the position of the tab 1a. When the camera 35 checks the electrode plate lying on the alignment base 34, the electrode plate alignment panel 31a is located between the camera 35 and the alignment base 34. Thus, the panel 31a is sized such that the edges of the electrode plate 1 placed on the panel 31a is protruded from the panel 31a to be seen by the camera 35 (see FIG. 13).

The failure discharge tray 37 described above may be controlled to slide in at a necessary time such as the failure determination by the camera 35, or when two or more layers of the electrode plate are detected by the sensor 19 such that the defective electrode plate can be discharged.

Referring to FIG. 7, the electrode plate alignment panels 31a and 31b are connected to the alignment loader 32 by cylinders 33a and 33b, thereby they are liftable.

Referring to FIG. 8, a roll of separator 3 and a stacking unit 40 are shown, and the stacking unit 40 includes a horizontal movement mechanism 50, an actuator 46, an actuator rod 46a, and others.

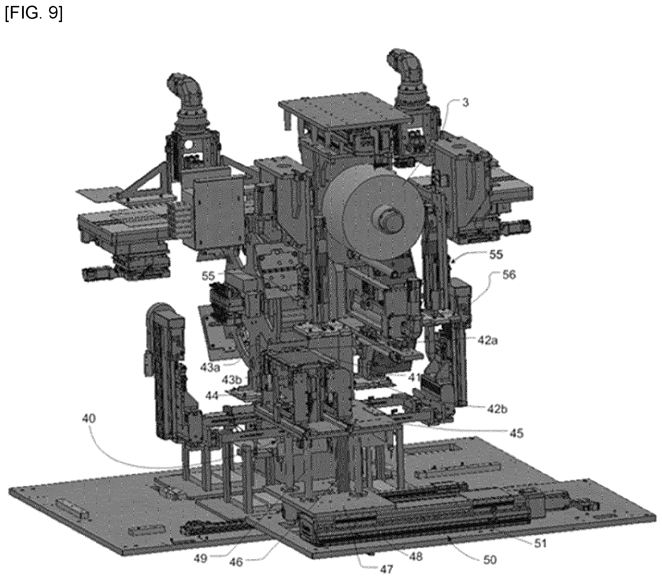

Referring to FIG. 9, the stacking unit 40 is shown in more detail. The stack base 41, grippers 42a, 42b, 43a, and 43b, and a motor 44 are fixed to the stack base holding frame 45. An actuator rod 46a and a guide rod 49 are connected below. The actuator rod 46a and the guide rod 49 are movable up and down through the horizontal moving plate 47. Therefore, the actuator rod 46a can be raised or lowered by the operation of the actuator 46, which allows the stack base holding frame 45 and the stack base 41 to vertically move up or down.

The horizontal moving plate 47 is fixed to a bracket 48 that is movable along a rail 51 of a horizontal movement mechanism 50. Therefore, when the horizontal movement mechanism 50 is activated, the horizontal moving plate 47 may be moved left and right, and thus the stack base 41 can be moved horizontally.

Hereinafter, the operation of the apparatus for manufacturing cell stacks for prismatic secondary battery according to the present invention configured as described above will be explained.

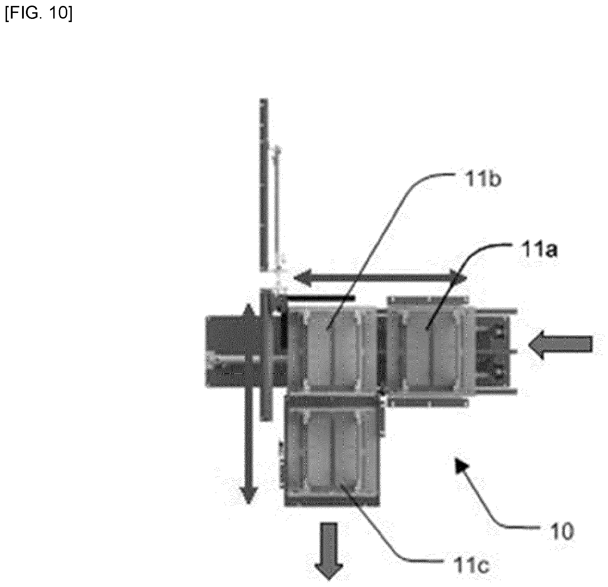

First, referring to FIG. 10, the process of supplying the electrode plate to the stack manufacturing apparatus will be described. The cassette 11a enters in A direction and moves to the position of the cassette 11b. Then, the electrode plate provided in the cassette 11b is supplied to the electrode plate holding panel 21a. When the cassette 11b becomes emptied, it is moved to the position of the cassette 11c in B direction, and then discharged from the electrode plate supply unit 10. Thereafter, a waiting cassette 11a is moved to the position of the cassette 11b. Such movement of the cassettes may be automatically performed by a signal of a sensor that detects whether the electrode plates in the cassette 11b are exhausted.

While the cassette 11b containing the electrode plates is provided in this way, as shown in FIG. 11, the elongated suction pickers 14a, 14b, 14c, and 14d attached to an arm 15 are lowered by lowering the electrode plate loader 12 in the form of an orthogonal robot to vacuum-adsorb the electrode plate 1 on the uppermost surface of the electrode plates pile in the cassette 11b. At this time, the suction picker adsorbs portions near the edge of the rectangular electrode plate. Then, the electrode plate loader 12 starts to ascend and ascends until the electrode plate holding panel 21a which is in an empty state, that is, without holding an electrode plate, adsorbs the electrode plate. The electrode plate holding panels (refer to reference numeral 21c of FIG. 11; for convenience of description, the electrode plate 1 is shown as transparent in the drawing so that the panel on the back thereof is displayed and denoted by the reference numerals. The same is applied to the other holding panels) have vacuum holes 23 in the panels 21a, 21b, 21c, 21d, 21e, and 21f. In this embodiment, three vacuum holes are formed in upper part and lower part, respectively. The vacuum hole 23 may be connected to the vacuum generator 25 (see FIG. 5) to generate a vacuum suction force on the surfaces of the panels 21a, 21b, 21c, 21d, 21e, and 21f. The number of vacuum holes 23 is variable, and if necessary, it is also possible to control the vacuum holes so that vacuum is generated in some of the vacuum holes 23. Inside the panels 21a, 21b, 21c, 21d, 21e, and 21f, fastening holes 24 were formed to be fastened to the rotating body 22.

The electrode plate holding panel 21a is formed such that the surface area of the electrode plate is smaller than that of the electrode plate 1, thereby the edges of the rectangular electrode plate can protrude from the panel 21a when it is held on the panel 21a (see FIG. 11). By doing so, the suction pickers 14a, 14b, 14c, and 14d can be prevented from being disturbed by the electrode plate holding panel 21a when they are raised while adsorbing the electrode plate 1. Of course, the area of the plate holding panel may be larger than the plate and any other shape may be possible if it does not interfere with the lift of the suction picker. When the electrode plate holding panel 21a holds the electrode plate 1, supply of one electrode plate is completed, and the rotating body 22 rotates.

The rotation manner of the rotating body 22 will be described. The rotating body 22 rotates intermittently and periodically in the order of rotation-stop-rotation, and rotates in one direction by an angle less than 180 degrees per one rotational operation. Referring to FIG. 12, a total of six electrode plate holding panels 21a, 21b, 21c, 21d, 21e, and 21f are attached to the rotating body 22, and one full turn of the rotating body 22 is comprised of six rotational operations. That is, one rotational operation rotates the rotating body 22 by 60 degrees. FIG. 12 captures a stop motion of the rotating body 22, in which the electrode plate loading operation described above is performed on the electrode plate holding panel 21a; an inspection operation is performed on the electrode plate holding panel 21c by using a sensor 19, for example, a laser displacement sensor, to determine whether the panel 21c holds two or more electrode plates; electrode plate alignment operation is performed on the electrode plate holding panel 21d; and an electrode plate transfer operation is performed on the electrode plate holding panel 21e by transferring the electrode plate held on the panel 21e to the stack base 41. As such, desired operations can be simultaneously performed on a plurality of panels attached to the rotating body 22 during one stop operation, and when these operations are completed, a subsequent 60-degree rotation will be performed and the above operations will be performed again on the subsequent electrode plates. That is, all the above-described operations can be performed on one electrode plate by moving the electrode plate by the rotation of the rotating body 22 while the position where a predetermined operation is performed is fixed. In this way, the electrode plate 1 supplied to the electrode plate holding panel 21a can be transferred to the stack base 41 after going through all the desired operations while the rotating body 22 makes a full turn. Depending on the number of electrode plate holding panels and the number of operations required, a panel may be in an operation-free state when the panel is stopped at a particular position, and a panel may be empty without holding an electrode plate. In this way, since the electrode plate is continuously transferred in one direction, it is not necessary to return to the opposite direction, thereby reducing the electrode plate transfer time.

As shown in Fig. 13, the rotation of the rotating body 22 is made in the direction of the arrow (a), and the alignment operation for the electrode plate located at the top of the rotating body is performed as follows.

First, a cylinder 33b of the alignment loader 32 is lowered so that the electrode plate alignment pad 31b can adsorb the unaligned electrode plate held by the electrode plate holding pad 21d stopped at the top of the rotating body 22 (see FIG. 12). When the electrode plate alignment pad 31b adsorbs the electrode plate, the cylinder 33b is raised, the alignment loader 32 is rotated 180 degrees (in the direction of the arrow (b1) in FIG. 13), and then the cylinder 33a is lowered to place the unaligned plate on the alignment base 34. The camera 35 determines the alignment by detecting the corner position of the unaligned electrode plate or the like and finely moves the alignment base 34 about the X-Y-Z axis until the alignment is confirmed. By operating the alignment loader 32 and the electrode plate alignment pad in the reverse order, the aligned electrode plate is returned to the electrode plate holding pad 21d (in the direction of arrow (b2) in FIG. 13). Since the operations indicated by arrows (b1) and (b2) in FIG. 13 proceed simultaneously, the electrode plate alignment pad 31a adsorbs the electrode plate already aligned when the other electrode plate alignment pad 31b adsorbs another unaligned electrode plate, and the electrode plate alignment pad 31b puts the aligned electrode plate on the electrode plate holding pad 21d when the other electrode plate alignment pad 31a puts the unaligned electrode plate on the alignment base 34.

The electrode plates arranged as described above are moved to a position facing the electrode plate transfer panel 56 of the stack base loader 55 according to a further rotation of the rotating body, and the electrode plate is transferred by vertically moving the stack base loader 55 in the extending direction toward the transfer panel 56. Next, the stack base loader moves vertically in the contraction direction and rotates again (indicated by arrow (c)) so that the electrode plate is loaded into the stack base 41. If the length of the stack base loader 55 is optimally adjusted to take over the plate, the vertical movement of the stack base loader 55 may be minimized and even vertical movement may not be required.

The stack base 41 then moves in the direction of arrow (d) for stacking the other electrodes 2.

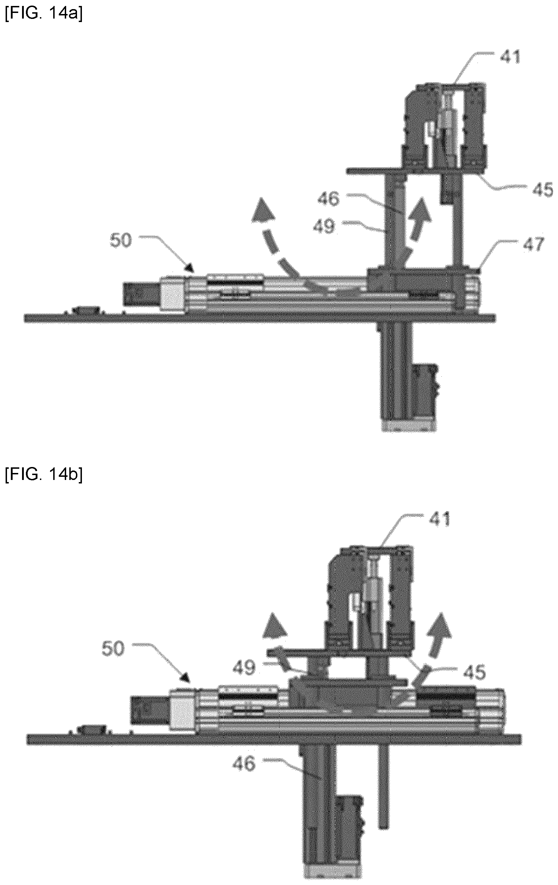

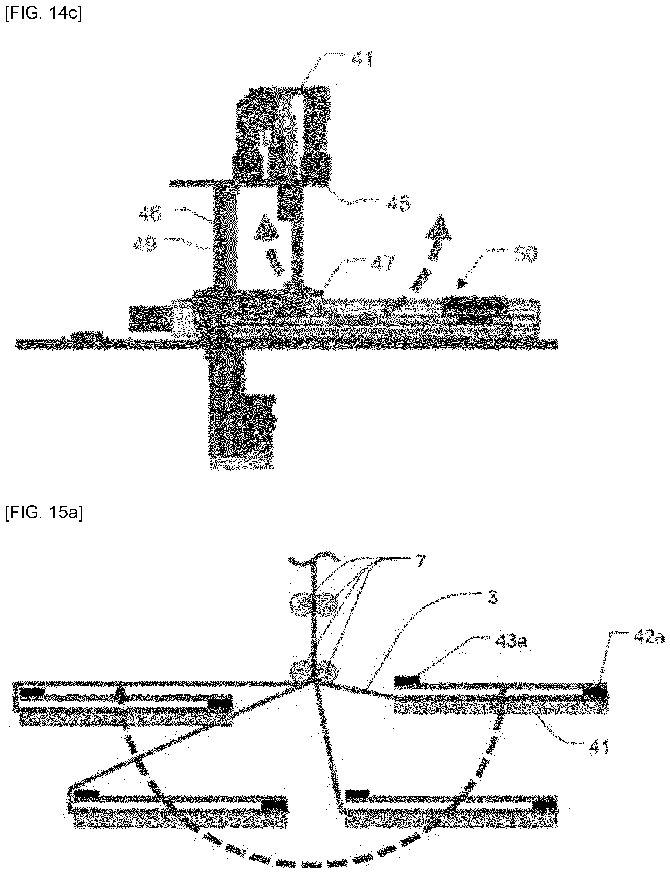

Now, a method for moving the stack base 41 will be described with reference to FIGS. 14a, 14b, and 14c. The method for moving the stack base 41 according to the present invention as described below may be utilized in combination with various methods for loading electrode plates, by which the electrode plates can be transferred to the stack base 41. In other words, the method for moving the stack base may be utilized in combination with the above-described method using a rotating body, a method using an adsorption-type transfer robot, a method using a linkage-type loading unit, a method using a conveyor belt, and any other appropriate methods.

In FIG. 14a, a stack base 41 is located at the upper right of the drawing. FIG. 14a captures the position at which one of the positive electrode plate and the negative electrode plate is just stacked on the separator. When the electrode plate is placed on the stack base 41, the gripper 43a grips the electrode plate and the separator thereunder altogether, which is accomplished by retreating-rising-forwarding-lowering the gripper 43a. At this point, the opposite gripper 42a is positioned under the electrode plate just stacked (see Fig. 15a). Since the horizontal movement mechanism 50 can operate for the horizontal movement of the stack base 41 and the actuator 46 can operate for the vertical movement of the stack base 41, the combined operation can make a movement of the stack base 41 in a U-shaped or lower semicircular trajectory as marked by the arrows in the drawings. This combined operation can be implemented using PC control or PLC control.

Alternatively, the U-shaped or lower semicircular movement of the stack base 41 may be implemented using a cam unit (not shown). For example, it is possible to provide a cam unit including a plate-shaped cam driving body and a following body linked to the cam driving body and moves in accordance with a rotating or reciprocating movement of the cam driving body. The stack base 41 may move in the U-shaped or lower semicircular trajectory by being coupled directly or indirectly to the following body.

FIG. 14b shows the stack base 41 to the left and in a lowered state, and FIG. 14c shows the stack base 41 to further left and in a raised state. In this manner, the stack base 41 moves in a U-shaped or lower semicircular trajectory in the electrode plate stacking unit.

One more layer of the separator is stacked by the movement according to FIG. 14a to FIG. 14c, and after reaching the position of FIG. 14c, the remaining one of the two kinds of electrode plates is stacked on the separator. Then, the gripper 42a grips the electrode plate and the separator thereunder. Next, it moves along the U-shaped or lower semicircular trajectory in the opposite direction, that is, from FIG. 14c through FIG. 14b to FIG. 14a.

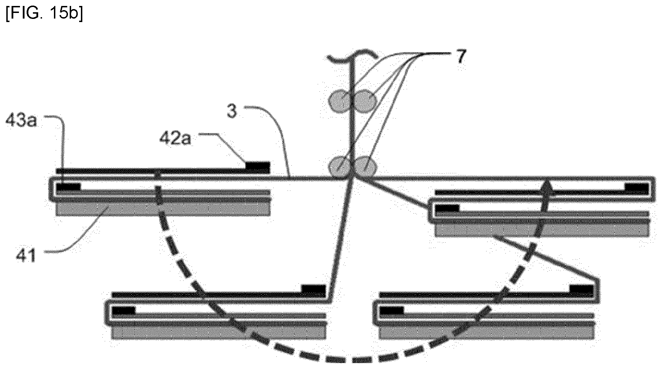

FIGS. 15a and 15b conceptually illustrate the movement of the stack base 41 shown in FIGS. 14a-14c. Referring to FIG. 15a, a process of moving the stack base 41 from a right side to a left side in a U-shaped or lower semicircular trajectory is shown in one view. It is important here that the separator 3 is not fed back during this movement of the lower semicircular trajectory. In other words, the portion of the separator 3 corresponding to the length from the roller located at the lowermost position among the guide rollers 7 (hereinafter referred to as 'end roller') to the portion gripped by the gripper 43a will increase gradually as L1-L2-L3-L4. In this way, since the separator is only released without being wound in the reverse direction, the path along which the separator is unwound is kept constant without being shaken, and there is no need to realign the reel members 6 and the guide rollers 7. Therefore, the stack base 41 can continuously be moved without waiting for realignment, and its moving speed can be increased to the maximum performance of the equipment.

Additional configurations may be added to further increase the stability of such a semicircular or U-shaped movement of the stack base. For example, if a powder clutch (not shown) employed to maintain the tension of the separator is malfunctioning, the separator may not be released at a desired speed or even run back. In order to prevent the risk of unexpected malfunction including this, or to prepare for a case in which the release of the separator is not performed as desired by any other factors, a sensor (not shown) for detecting the running direction and/or speed of the separator can be installed. Such a sensor may be installed near the end rollers or in other suitable locations. By inputting of the detection result by the sensor as a feedback to a control unit for controlling the operation of the actuator 46 and the horizontal movement mechanism 50, it will be possible to control the separator to be released in the desired running direction and speed. It is also possible to monitor the release of the separator in a manner other than the sensor, for example, by sensing the rotational direction and speed of the guide rollers 7 including the end roller or any other roller. Based on this monitoring information, the moving speed of the stack base may be adjusted, thereby preventing the back-feed of the separator and releasing the separator at a desired speed.

In FIG. 15b, which shows the movement of the lower semicircular trajectory of the stack base 41 in the opposite direction to that in FIG. 15a, similarly, the portion of the separator 3 gradually increases as L1'-L2'-L3'-L4' during the movement of the stack base 41.

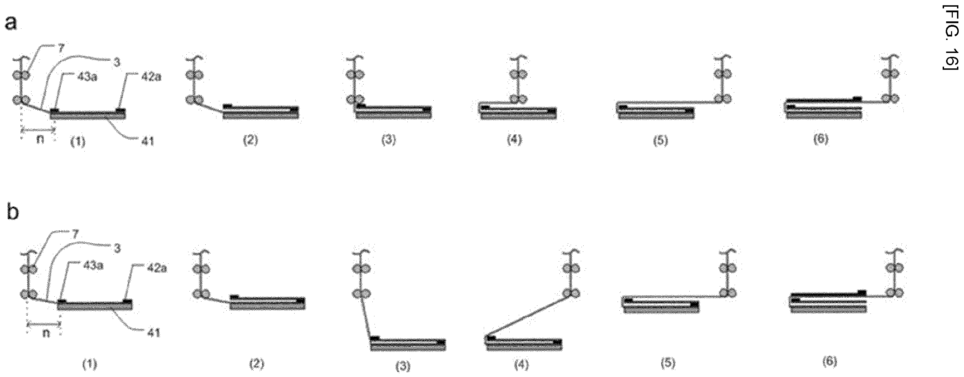

In FIG. 16, 'a' sequentially illustrates the movement path of the stack base according to the prior art, and 'b' sequentially illustrates the movement path of the stack base according to the present invention. Referring to 'b' showing the movement path of the stack base according to the present invention, going from step (1) to step (2), the electrode plate 1 was stacked, the gripper 43a moved in over the electrode plate 1 and gripped it. Then, the stack base 41 was moved in a semi-circular or U-shaped trajectory from step (3) to step (5), and in step 6 another electrode plate 2 was stacked and the gripper 42a moved in over the electrode plate 2 and gripped it.

Comparing the steps (3) through (5) in the movement path 'b' with those in the path 'a' which is a movement path according to the prior art, it can be seen that less force is applied to the separator 3 by the gripper 43a in the movement path 'b' compared to the corresponding force in the movement path 'a'. Referring to the step (4), in the movement path 'a', the force exerted by the gripper 43a in the acceleration direction (that is, to the left side) is fully transmitted to the separator 3, whereas in the movement path 'b', the force due to the gripper 43a in the acceleration direction (i.e., slantingly) is only partially transmitted to the separator 3. Furthermore, when the step 5 is compared, in the movement path 'a,' the blade-like side of the gripper 43a exerts a force on the narrow area of the separator 3 since the acceleration direction is left, while in the movement path 'b,' the surface of the gripper 43a exerts a force on a relatively large area of the separator 3 since the acceleration direction is upward.

Therefore, the risk of damage to the separator 3 is significantly lowered by employing a semi-circular or U-shaped movement of the stack base according to the present invention.

As described above, according to the stack manufacturing apparatus of the present invention, it is possible to move the electrode plate more quickly, and the stacking speed of the electrode plate can be maximized. This may bring a significant productivity improvement in the manufacturing field of the prismatic secondary batteries.

In the above, certain preferred embodiments of the present invention have been illustrated and described. However, the present invention is not limited to the above-described embodiments, and various modifications may be made by any person having ordinary skill in the art to which the present invention pertains without departing from the gist and spirit of the present invention as claimed in the claims.

### - Explanation of reference numbers -

10: electrode plate supply unit
20: electrode plate loading unit
21a ∼ f: electrode plate holding panel
22: rotating body
30: electrode plate alignment unit
40: stacking unit
41: stack base
55: stack base loader

## Claims

1. An apparatus for manufacturing a cell stack for a secondary battery, the apparatus comprising:
a stack base on which an electrode plate to be stacked is placed, a gripper for fixing the electrode plate placed on the stack base, and a stacking unit including a moving means for moving the stack base between a position where a positive electrode plate is placed and a position where a negative electrode plate is placed,
wherein the moving means is capable of moving the stack base in a U-shaped trajectory.

2. An apparatus for manufacturing a cell stack for a secondary battery, the apparatus comprising:
a stack base on which an electrode plate to be stacked is placed, a gripper for fixing the electrode plate placed on the stack base, and a stacking unit including a moving means for moving the stack base between a position where a positive electrode plate is placed and a position where a negative electrode plate is placed,
wherein the moving means is capable of moving the stack base in a lower semicircular trajectory.

3. The apparatus according to claim 1 or 2,
wherein the moving means includes an actuator capable of vertically moving the stack base, and a horizontal movement mechanism capable of horizontally moving the stack base.

4. The apparatus according to claim 1 or 2,
wherein the moving means includes a cam unit having a cam driving body and a cam following body.

5. The apparatus according to claim 1 or 2,
wherein a backfeeding of a separator does not occur while the moving means moves the stack base.
